# EUROPÄISCHE PATENTSCHRIFT

(11) **EP 3 064 325 B1**
(45) Veröffentlichungstag und Bekanntmachung des Hinweises auf die Patenterteilung: **23.01.2019**
(21) Anmeldenummer: 16157561.8
(22) Anmeldetag: 26.02.2016
(51) Int. Cl.: B25J 15/00, B25J 15/02, B25J 15/06

(54) **GREIFER FÜR EINEN ROBOTER UND ZUGEHÖRIGER ROBOTER**
GRIPPER FOR A ROBOT AND ASSOCIATED ROBOT
DISPOSITIF DE PREHENSION POUR UN ROBOT ET ROBOT ASSOCIE

(30) Priorität: 02.03.2015 DE 102015102968
(43) Veröffentlichungstag der Anmeldung: 07.09.2016
(73) Patentinhaber: E. Braun GmbH Entwicklung und Vertrieb von technischem Zubehör, 91126 Kammerstein (DE)
(72) Erfinder: BRAUN, Andreas, 91126 Kammerstein (DE); SCHNEIDER, Jörg, 91126 Kammerstein (DE)
(74) Vertreter: Dr. Gassner & Partner mbB

(56) Entgegenhaltungen:
- EP-A1- 0 045 174
- DE-A1-102009 017 999
- DE-A1-102010 063 202
- JP-A- H1 133 964
- JP-U- S5 844 195

## Beschreibung

Die Erfindung betrifft einen Greifer für einen Roboter mit den Merkmalen des Oberbegriffs des Anspruchs 1. Daneben betrifft die Erfindung einen Roboter mit den Merkmalen des Anspruchs 11.

Ein derartiger Greifer ist aus dem Dokument JP H11 33964 A bekannt.

JP S58 44195 U beschriebt einen Greifer mit zwei Greiferbacken, die durch einen Antrieb synchron aufeinander zu oder voneinander weg bewegt werden können.

In vielen Produktionsbereichen werden Roboter in zunehmendem Maße für Montagetätigkeiten eingesetzt. Mittels des Greifers werden einzelne Objekte, Komponenten oder Bauteile gegriffen und montiert, indem eine Reihe von Montageschritten automatisch durchgeführt wird. Die einzelnen Objekte können beispielsweise ungeordnet in einem Behälter oder geordnet, beispielsweise gestapelt, bereitgestellt werden. Für bestimmte Anwendungen ist es erforderlich, eine Vielzahl unterschiedlicher Einzelteile zu montieren. Dabei bewegt sich der Greifer abwechselnd zwischen einem Montageplatz und den losen oder z. B. gestapelten Einzelteilen hin und her. Bei einer hohen Anzahl unterschiedlicher Objekte kann dies dazu führen, dass jedes Objekt einzeln von dem Greifer geholt werden muss, wodurch sich eine lange Montagezeit ergibt. Ein weiteres Problem ist darin zu sehen, dass aufgrund der unterschiedlich geformten Objekte und deren Komplexität teilweise speziell angepasste Greifer benötigt werden, so dass jedes Mal oder zumindest sehr häufig ein Wechsel des Greifers erforderlich ist. Dieser Greiferwechsel verursacht ebenfalls eine Verlängerung der Montagedauer, zudem entstehen durch die unterschiedlichen benötigten Greifer beträchtliche Kosten.

Ein spezielles Anwendungsgebiet für einen derartigen Greifer ist die Bestückung von sogenannten Hutschienen mit elektrischen Komponenten, insbesondere Klemmen. Die bestückten Hutschienen werden anschließend in ein Schaltschrankgehäuse eingebaut und verdrahtet. Derartige Schaltschränke werden sowohl in der Gebäudeinstallationstechnik als auch zur elektrischen Steuerung von Maschinen und Anlagen benötigt.

Bei der Bestückung von Hutschienen besteht das Problem, dass häufig eine Vielzahl unterschiedlicher Komponenten zu montieren ist, insbesondere unterschiedlich geformte Klemmen, die sich sowohl hinsichtlich ihrer Form als auch hinsichtlich ihrer Größe unterscheiden. Häufig werden auch Produkte verschiedener Hersteller eingesetzt, wodurch sich die Variantenvielfalt erhöht. In der Praxis werden daher bisher auch größere Stückzahlen identischer Schaltschränke bzw. Hutschienen manuell bestückt. Es ist allerdings schwierig, dabei eine 100%ige Fehlerfreiheit sicherzustellen bzw. eine falsche oder eine fehlende Klemme zu finden. Ein weiterer Nachteil ist darin zu sehen, dass die bisher übliche manuelle Montage einen beträchtlichen Zeitbedarf erfordert.

Der Erfindung liegt daher die Aufgabe zugrunde, einen Greifer für einen Roboter anzugeben, der zum Greifen und zum Montieren von insbesondere flachen und plattenförmigen Objekten wie elektrischen Klemmen geeignet ist.

Zur Lösung dieser Aufgabe ist ein Greifer mit den Merkmalen des Anspruchs 1 vorgesehen.

Der erfindungsgemäße Greifer ermöglicht es, eine größere Anzahl unterschiedlicher Objekte aufzunehmen und nacheinander zu montieren. Die Montage erfolgt dabei auf einer Hutschiene. Dadurch ergibt sich der Vorteil, dass mehrere unterschiedliche gegriffene Objekte nacheinander montiert werden können, ohne dass der Greifer zwischenzeitlich zu einem Vorratsbehälter, einem Stapel oder dergleichen bewegt werden muss. Da der Greifer mehrere verteilt angeordnete Greiferbacken aufweist, die jeweils zumindest die erste Ausnehmung und die zweite Ausnehmung aufweisen, können pro Greiferbacke wenigstens zwei unterschiedliche Objekte gegriffen und zu einem Montageplatz bewegt werden. Bei einem drei Greiferbacken aufweisenden Greifer, bei dem jede Greiferbacke zwei unterschiedliche Ausnehmungen aufweist, können somit sechs verschiedene Objekte gegriffen und bevorratet werden. Dadurch kann auf eine permanente hin und her gehende Bewegung verzichtet werden, wie sie bei herkömmlichen Greifern erforderlich ist.

Eine Weiterbildung der Erfindung sieht vor, dass die Ausnehmungen des erfindungsgemäßen Greifers parallel zur Oberfläche der Greiferbacke angeordnet sind. Die Ausnehmungen entsprechen jeweils zumindest näherungsweise der Negativkontur eines zu greifenden Objekts. Indem mehrere Ausnehmungen senkrecht zur Oberfläche einer Greiferbacke angeordnet sind, können mehrere gegriffene Objekte platzsparend aufgenommen werden. Mehrere Ausnehmungen, die bezogen auf die Oberfläche vertikal zueinander versetzt sind, sind so angeordnet, dass die kleinste Ausnehmung weiter innen als eine kleinere Ausnehmung angeordnet ist. Auf diese Weise wird ein Hinterschnitt vermieden.

Bei dem erfindungsgemäßen Greifer wird es besonders bevorzugt, dass sich wenigstens eine Ausnehmung bis zu einer Kante einer Greiferbacke erstreckt. Dementsprechend befindet sich auch eine Kante eines zu greifenden Objekts, insbesondere einer Klemme, im gegriffenen Zustand im Bereich der Kante der Greiferbacke. Dadurch wird es ermöglicht, die gegriffene Klemme auf eine Profilschiene, insbesondere auf eine Hutschiene, zu setzen. Es ist nicht erforderlich, dass das gegriffene Objekt exakt bündig zu der Kante angeordnet ist, stattdessen kann es auch etwas nach außen vorstehen.

Um einen sicheren Transport der gegriffenen Objekte zu gewährleisten, kann eine Greiferbacke eine Spanneinrichtung für ein gegriffenes Objekt aufweisen. Die Spanneinrichtung hält ein gegriffenes Objekt formschlüssig und/oder kraftschlüssig, so dass das oder die Objekte während des Transports von einem Vorratsbehälter zum Montageort sicher gehalten wird bzw. werden. Die Spanneinrichtung kann gemäß einer bevorzugten Variante eine zwei- oder mehrteilige Greiferbacke mit wenigstens einer bewegbaren Komponente aufweisen. Zum Aufnehmen eines Objekts wird die bewegbare Komponente der Greiferbacke von einer nicht bewegbaren Komponente weg bewegt, um die Spanneinrichtung zu öffnen. Nach dem Aufnehmen des Objekts wird die Spanneinrichtung geschlossen, indem die bewegbare Komponente in Richtung der nicht bewegbaren Komponente bewegt wird. Alternativ oder zusätzlich kann die Spanneinrichtung auch einen bewegbaren Dorn aufweisen.

Für bestimmte zu greifende Objekte kann es vorgesehen sein, dass eine Greiferbacke im Bereich einer Anlagefläche für ein zu greifendes Objekt ein Unterdruckerzeugungsmittel und/oder einen Unterdruckanschluss aufweist. Bei dieser Ausgestaltung wird eine Fläche des gegriffenen Objekts mit Unterdruck beaufschlagt, so dass das Objekt gegen die Greiferbacke gesaugt und dadurch gehalten wird.

Um den Status des erfindungsgemäßen Greifers überwachen zu können, liegt es auch im Rahmen der Erfindung, dass eine Greiferbacke einen Sensor zum Erfassen eines gegriffenen Objekts aufweist. Der Sensor kann als Taster oder Schalter ausgebildet sein, der ein Schaltsignal erzeugt, wenn sich ein gegriffenes Objekt in der Greiferbacke befindet. Auf diese Weise kann erfasst werden, ob ein Objekt ordnungsgemäß gegriffen oder wieder losgelassen wurde. Ebenso kann ein nicht richtig gegriffenes Objekt oder ein während des Transports verlorenes Objekt auf diese Weise detektiert werden.

In weiterer Ausgestaltung der Erfindung kann es vorgesehen sein, dass eine Greiferbacke eine Überlastsicherung mit einer vorzugsweise einstellbaren Auslöseschwelle aufweist. Die Überlastsicherung stellt sicher, dass die Profilschiene, insbesondere die Hutschiene, nicht mechanisch überlastet wird. Dasselbe gilt für die gegriffenen Objekte, insbesondere die Klemmen. Durch das Auslösen der Überlastsicherung kann somit eine Beschädigung der zu montierenden Objekte und von Komponenten des Greifers verhindert werden.

Eine ganz besonders bevorzugte Ausgestaltung der Erfindung sieht vor, dass eine Greiferplatte zwei, drei oder vier an der Grundplatte in identischen Winkelabständen angebrachte Greiferbacken aufweist. Vorzugsweise ist die Greiferplatte rotationssymmetrisch ausgebildet. Durch Drehen der Greiferplatte um ihre Drehachse um einen bestimmten Drehwinkel können die einzelnen Greiferbacken nacheinander in eine bestimmte Position gebracht werden, beispielsweise in eine Position zum Aufnehmen eines Objekts oder in eine Position zum Ablegen und Positionieren eines Objekts. Dementsprechend können die Greiferbacken durch nacheinander erfolgende Drehbewegungen entweder Objekte schnell aufnehmen oder schnell ablegen und positionieren. Eine Drehung erstreckt sich dabei um einen bestimmten Drehwinkel, der der Beziehung in 360°/n entspricht, wobei n die Anzahl der Greiferbacken ist. Bei zwei vorhandenen Greiferbacken wird die Greiferplatte somit um 180° weiter gedreht, bei drei vorhandenen Greiferbacken jeweils um 120° usw.

Der erfindungsgemäße Greifer ist insbesondere für die Montage von elektrischen Klemmen auf einer Hutschiene vorgesehen. Daher sind die Ausnehmungen der Greiferbacken an die Konturen unterschiedlicher Klemmen angepasst.

Alternativ kann ein Greifer auch Greiferbacken aufweisen, deren Ausnehmungen für andere Objekte vorgesehen sind, z. B. für Abdeckplatten, Schütze, Sicherungsautomaten und weitere elektrische Komponenten.

Daneben betrifft die Erfindung einen Roboter, mit einem Grundkörper, an dem ein um mehrere Achsen schwenkbarer Greifer der beschriebenen Art angeordnet ist, der mittels einer Steuerungseinrichtung steuerbar ist. In der Steuerungseinrichtung ist ein Bestückungsplan hinterlegt, der z. B. für einen bestimmten Typ eines Schaltschranks vorgesehen ist. Mittels des Roboters werden nacheinander die benötigten Hutschienen mit den elektrischen Klemmen versehen, wobei diese Montage in der beschriebenen Weise besonders effizient und schnell durchgeführt werden kann, sodass eine vollautomatische Bestückung von Hutschienen bzw. Schaltschränken mit elektrischen Klemmen und anderen benötigten Bauteilen möglich ist.

Bei dem erfindungsgemäßen Roboter ist die Steuerungseinrichtung dazu ausgebildet, den Greifer so zu steuern, dass die Objekte nebeneinander auf einer Profilschiene, insbesondere auf einer Hutschiene, anordenbar sind.

Hinsichtlich des erfindungsgemäßen Roboters wird es bevorzugt, dass er einen Linearantrieb aufweist und entlang einer Bewegungsrichtung verfahrbar ist. Beispielsweise kann der Linearantrieb eine Schiene oder zwei parallele Schienen umfassen oder damit verbunden sein, auf denen der Roboter verfahrbar ist. Daneben kommen natürlich auch andere Antriebe in Frage, beispielsweise ein Spindeltrieb.

Die Erfindung wird nachfolgend anhand eines Ausführungsbeispiels unter Bezugnahme auf die Zeichnungen erläutert. Die Zeichnungen sind schematische Darstellungen und zeigen:
- Figur 1: eine perspektivische Ansicht eines erfindungsgemäßen Greifers;
- Figur 2: eine Seitenansicht des in Figur 1 gezeigten Greifers;
- Figur 3: eine Draufsicht auf die Grundplatte des in Figur 1 gezeigten Greifers sowie eine Hutschiene;
- Figur 4: den in Figur 1 gezeigten Greifer beim Bestücken der Hutschiene;
- Figur 5: ein weiteres Ausführungsbeispiel eines erfindungsgemäßen Greifers in einer perspektivischen Ansicht; und
- Figur 6: eine Seitenansicht des in Figur 5 gezeigten Greifers.

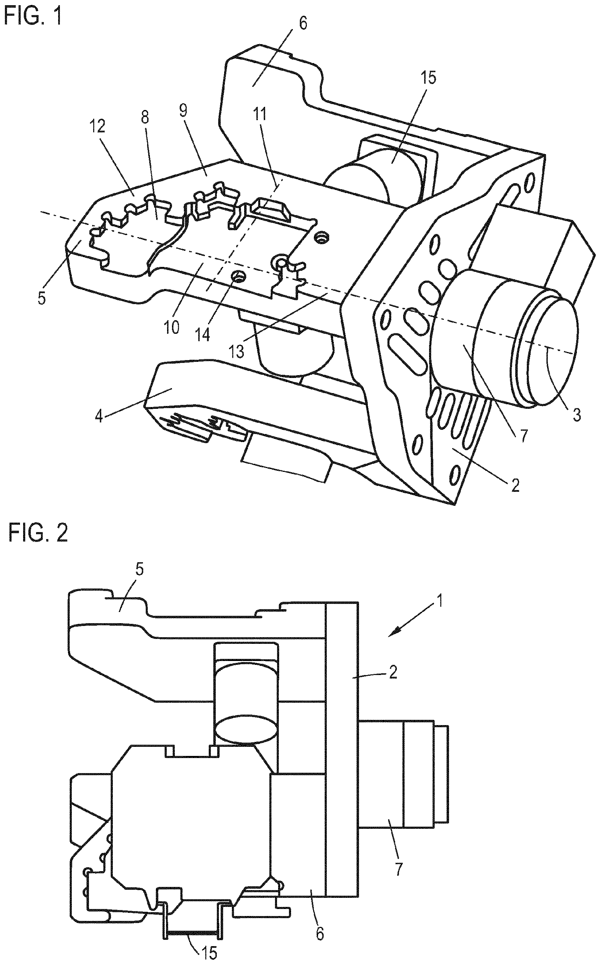

Der in Figur 1 in einer perspektivischen Ansicht gezeigte Greifer 1 umfasst im Wesentlichen eine Grundplatte 2, die eine näherungsweise dreieckige Form aufweist. Die Grundplatte 2 ist um eine als strichpunktierte Linie dargestellte Drehachse 3 schwenkbar, die durch das Zentrum der Grundplatte 2 verläuft. Von der Grundplatte 2 erstrecken sich insgesamt drei Greiferbacken 4, 5, 6. Die Greiferbacken 4, 5, 6 sind an der Grundplatte 2 in Umfangsrichtung verteilt angeordnet und fest mit der Grundplatte 2 verbunden, in dem dargestellten Ausführungsbeispiel sind sie verschraubt. An der den Greiferbacken 4, 5, 6 entgegengesetzten Seite der Grundplatte 2 befindet sich ein Schnellspannadapter 7, der an einem Roboterarm befestigbar ist. Durch eine entsprechende Steuerung des drehbaren Roboterarms kann der Greifer 1 um seine Drehachse 3 gedreht werden.

Die Greiferbacken 4, 5, 6 weisen eine rechteckige Grundform auf. Die nach außen weisende Oberfläche 9 einer Greiferbacke 4, 5, 6 weist eine erste Ausnehmung 8 auf, die an die Außenkontur eines zu greifenden Objekts angepasst ist. In dem dargestellten Ausführungsbeispiel ist die erste Ausnehmung 8 an die Außenkontur einer Klemme angepasst, die auf eine Hutschiene gesetzt werden kann. Zusätzlich weist die Oberfläche 9 der Greiferbacke 5 eine zweite Ausnehmung 10 auf, die eine andere Form bzw. Kontur als die erste Ausnehmung 8 besitzt. In Figur 1 erkennt man, dass die beiden Ausnehmungen 8, 10 unterschiedlich geformt sind und sich teilweise überdecken. Wesentlich ist dabei, dass die beiden Ausnehmungen 8, 10 in unterschiedlichen Ebenen angeordnet sind. Von der Oberfläche 9 aus befindet sich die erste Ausnehmung 8 in einer ersten Ebene, die zweite Ausnehmung 10 befindet sich von der Oberfläche 9 aus gesehen in einer zweiten, tieferen, das heißt weiter nach innen versetzten Ebene. Die mehreren Ausnehmungen einer Greiferbacke sind so angeordnet, dass die Ausnehmung mit der größten Außenkontur benachbart zur Oberfläche angeordnet ist, weitere, parallel versetzte Ausnehmungen befinden sich weiter entfernt von der Oberfläche.

Die Greiferbacke 5 umfasst die beiden Ausnehmungen 8, 10, es sind allerdings auch andere Ausführungen möglich, bei denen z. B. drei oder mehr Ausnehmungen in zueinander parallelen Ebenen angeordnet sind.

In Figur 1 erkennt man, dass die Greiferbacke 5 zweiteilig ausgebildet ist, wobei die beiden Teile eine gemeinsame Kante 11 aufweisen. Die beiden Teile der Greiferbacke 5 sind Bestandteil einer Spanneinrichtung, bei der das äußere Teil 12 gegenüber einem inneren Teil 13 bewegbar ist. Im geöffneten Zustand der Spanneinrichtung sind die beiden Teile 12, 13 voneinander beabstandet, so dass ein zu greifendes Objekt in Form einer Klemme leicht aufgenommen werden kann. Anschließend wird das bewegbare Teil 12 verschoben, bis es das ortsfeste Teil 13 der Spanneinrichtung berührt, wodurch eine gegriffene Klemme kraft- und formschlüssig gehalten wird.

Im Bereich der zweiten Ausnehmung 10 ist eine Öffnung 14 erkennbar, die an einen Unterdruckanschluss angeschlossen ist. Bei der benachbarten Greiferbacke 6 sieht man, dass an deren Rückseite ein Mittel zum Erzeugen eines Unterdrucks in einem Gehäuse 15 angeordnet ist. Der auf eine gegriffene Klemme wirkende Unterdruck erzeugt eine Haltekraft, durch die die Klemme gegen die Oberfläche der zweiten Ausnehmung 10 gezogen wird.

Die übrigen Greiferbacken 4, 6 sind ähnlich wie die Greiferbacke 5 ausgebildet, die einzelnen Greiferbacken 4, 5, 6 unterscheiden sich jedoch hinsichtlich der Form ihrer Ausnehmungen. Jede Greiferbacke 4, 5, 6 ist für zwei spezielle Klemmentypen vorgesehen.

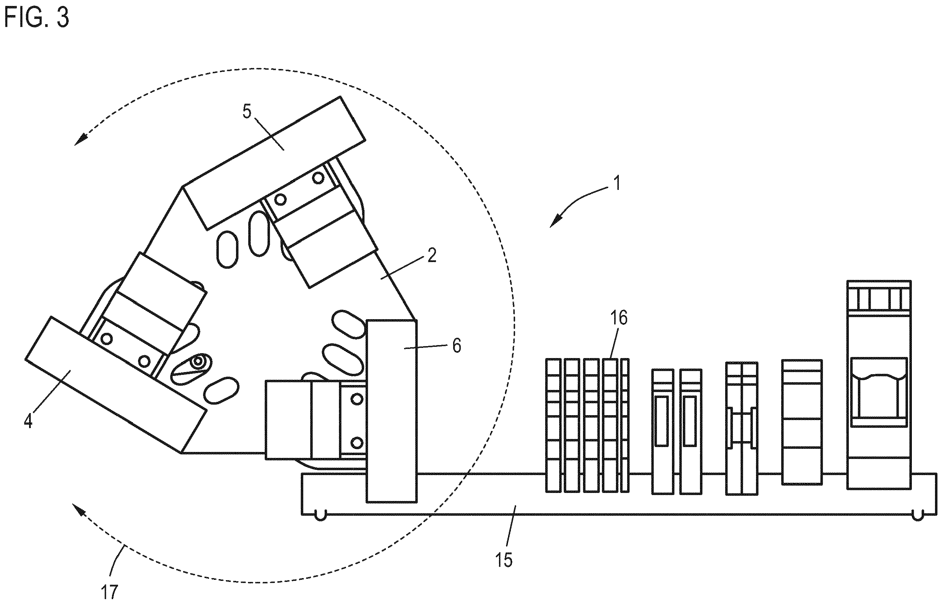

Die Figuren 2 und 3 zeigen den Greifer 1 während der Bestückung einer Hutschiene 15 mit unterschiedlichen Klemmen. Figur 2 ist eine Ansicht des Greifers 1 in Längsrichtung der Hutschiene, Figur 3 ist eine demgegenüber um 90° gedrehte Seitenansicht.

In der Seitenansicht von Figur 3 ist die Grundplatte 2 in einer Draufsicht zu sehen. Der Greifer 1 ist so zur Hutschiene 15 ausgerichtet, dass eine in einer Greiferbacke aufgenommene Klemme auf die Hutschiene 15 gesetzt werden kann. Der Greifer 1 wird dazu von einem Roboterarm, an dem er angebracht ist, mehrachsig bewegt. Dementsprechend kann der Greifer 1 jede beliebige Position anfahren. In Figur 3 ist die Hutschiene 15 bereits mit einigen Klemmen 16 bestückt worden. Die einzelnen Klemmen können entweder mit einem gewissen Abstand zueinander oder bevorzugt direkt nebeneinander angeordnet sein, so dass sie einander berühren. Die Greiferbacken sind so ausgebildet, dass die beiden Ausnehmungen einer Greiferbacke zwei unterschiedliche Klemmen in der Reihenfolge aufnehmen können, in der sie besonders häufig zur Bestückung der Hutschiene 15 benötigt werden. Dementsprechend können zwei Klemmen, die bereits in der richtigen Reihenfolge in der Greiferbacke aufgenommen sind, gleichzeitig auf der Hutschiene positioniert werden. Anschließend wird die Grundplatte 2 um ihre Drehachse um 120° gedreht, was in Figur 3 durch einen Kreisbogen 17 dargestellt wird. Da die Grundplatte 2 rotationssymmetrisch ist, befindet sich nach einer Drehung um 120° die nächste Greiferbacke an der in Figur 3 gezeigten Position. Die Greiferbacke wird entsprechend der Breite der zu montierenden Klemme axial, entlang der Hutschiene 15 verschoben und positioniert die nächste Klemme. Dieser Vorgang wird wiederholt, bis alle Klemmen, die in einer der Greiferbacken aufgenommen sind, auf der Hutschiene montiert sind.

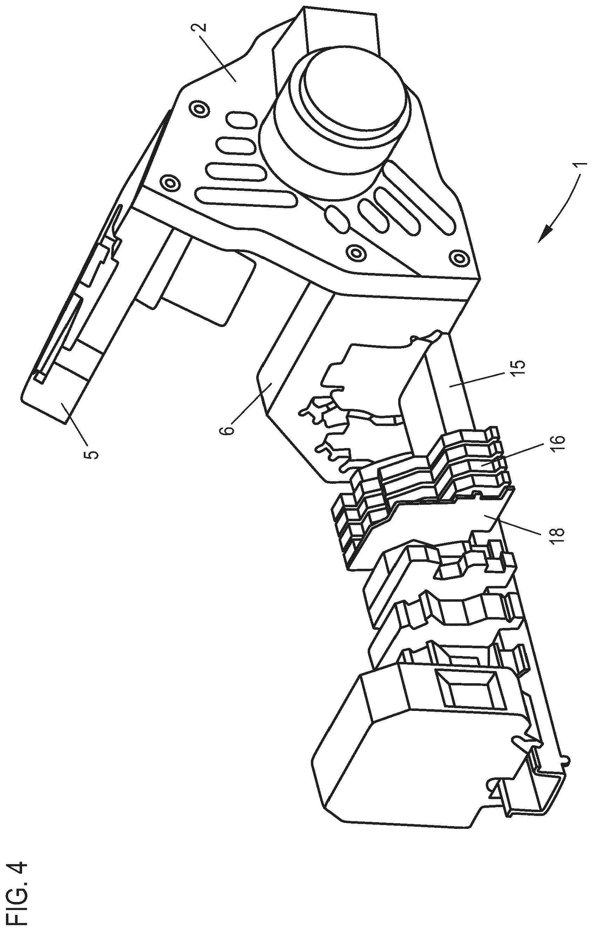

Figur 4 zeigt den Greifer 1 während der Bestückung der Hutschiene 15 in einer perspektivischen Ansicht. Dort ist ersichtlich, dass unterschiedliche oder gleiche Klemmen oder Abdeckplatten 18 durch die drehbare Grundplatte 2 mit den unterschiedlich bestückten Greiferbacken 4, 5, 6 sehr schnell nacheinander montiert werden können. Die Greiferbacken weisen eine Überlastsicherung auf, um bei einem auftretenden Fehler, beispielsweise als Folge einer Fehlprogrammierung des Roboterarms, eine Beschädigung der Klemmen und der Komponenten des Greifers 1 zu vermeiden.

Im Vergleich zu einem herkömmlichen Greifer kann der in diesem Ausführungsbeispiel beschriebene Greifer wesentlich schneller unterschiedliche Objekte wie Klemmen von einem Vorratsbehälter oder einem Stapel aufnehmen und nacheinander in der richtigen Reihenfolge auf einer Hutschiene montieren.

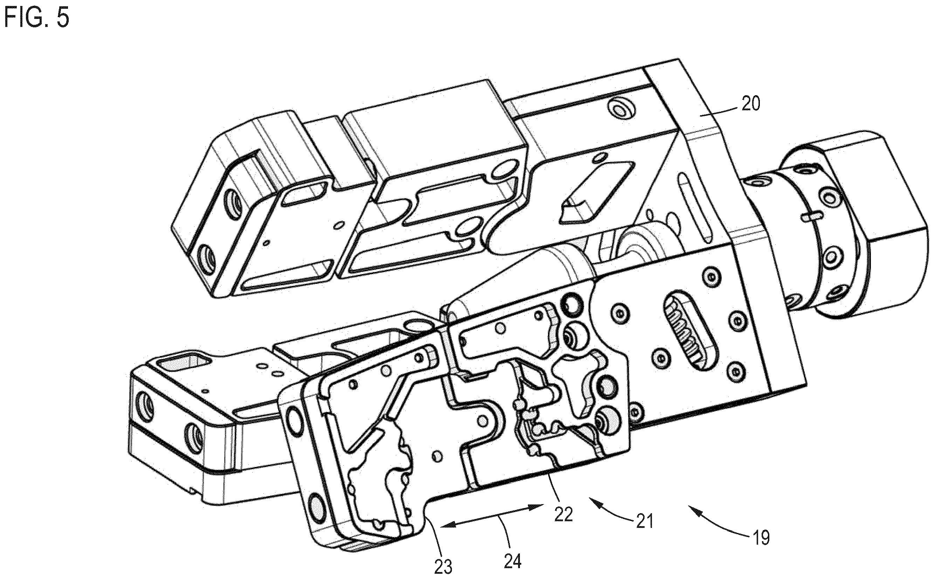

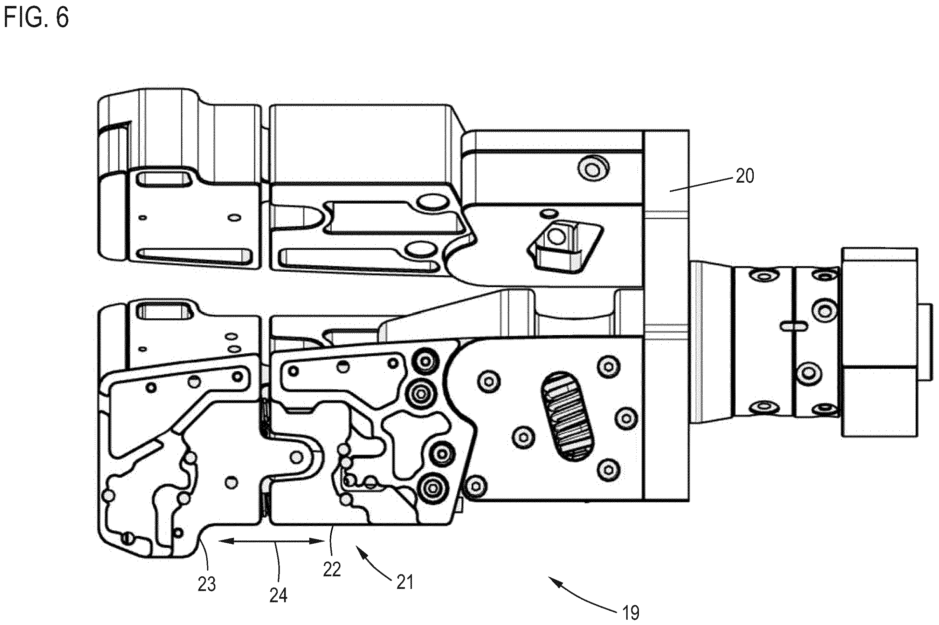

Die Figuren 5 und 6 zeigen ein weiteres Ausführungsbeispiel eines Greifers, wobei Figur 5 eine perspektivische Ansicht und Figur 6 eine Seitenansicht ist. Der Greifer 19 ist ähnlich wie der in den Figuren 1 bis 4 gezeigte Greifer aufgebaut. Der Greifer 19 umfasst eine drehbare Grundplatte 20, an der drei über den Umfang verteilte Greiferbacken 21 angeordnet sind. Nachfolgend wird die in den Figuren 5 und 6 vorne liegende Greiferbacke 21 beschrieben, die beiden anderen an der Grundplatte 20 angeordneten Greiferbacken können identisch wie die Greiferbacke 21 oder anders geformt, das heißt für das Aufnehmen anders geformter Reihenklemmen ausgebildet sein.

In Übereinstimmung zu dem ersten Ausführungsbeispiel umfasst die Greiferbacke 21 ein inneres Teil 22 und ein äußeres Teil 23. Mittels eines nicht näher dargestellten Antriebs ist das äußere Teil 23 gegenüber dem inneren Teil 22 bewegbar. Das äußere Teil 23 kann in die durch den Doppelpfeil 24 angegebenen Richtungen bewegt werden. Der Abstand zwischen der inneren Position des bewegbaren äußeren Teils 23 und der äußeren Position beträgt einige Millimeter. Wenn sich das äußere Teil 23 in der äußeren Position befindet, kann eine Reihenklemme aufgenommen werden. Nach dem Positionieren der Greiferbacke 21 wird das äußere Teil 23 mittels des Antriebs in die innere Position bewegt, wodurch die Reihenklemme aufgenommen wird. Nach dem Bewegen des Greifers 19 zu einer Montagestation wird die aufgenommene Reihenklemme auf einer Hutschiene oder einer anderen Tragschiene positioniert und montiert. Anschließend wird das äußere Teil 23 nach außen bewegt, wodurch die entsprechende Reihenklemme losgelassen wird. In den Figuren 5 und 6 erkennt man, dass die Greiferbacke 21 mehrere Ausnehmungen aufweist, die für unterschiedliche Reihenklemmen vorgesehen sind und die in unterschiedlichen Ebenen von der Außenfläche der Greiferbacke 21 angeordnet sind.

Bei anderen Ausführungen können bis zu drei vertikal gestaffelte Ausnehmungen für unterschiedliche Reihenklemmen vorgesehen sein. Die Konturen der Greiferbacke 21 sind so geformt, dass eine Reihenklemme beim Aufnehmen und Greifen zentriert und ausgerichtet wird. Diejenigen Teile der Greiferbacke 21, die die aufzunehmenden Reihenklemmen berühren, weisen Hartmetallzähne oder eine gehärtete Schicht auf, die den Verschleiß minimiert. Die Greiferbacke 21 weist einen Sensor auf, der das Vorhandensein einer Reihenklemme und deren korrekte Position erfasst. Auf diese Weise kann festgestellt werden, ob eine Reihenklemme oder ein anderes elektrisches Bauteil korrekt aufgenommen wurde oder nicht. Einem Greifer 19 ist ein Lesegerät für einen RFID-Transponder angeordnet, so dass der Greifer 19 in der Lage ist, die aufzunehmenden elektrischen Bauteile wie Reihenklemmen vordem Greifen zu identifizieren. Ein entsprechender RFID-Transponder kann entweder an einer Verpackung für die aufzunehmenden Bauteile oder an einer Kassette eines Magazinturms, in den eine derartige Verpackung eingesetzt wird, angebracht sein. Vor dem Aufnehmen einer Reihenklemme kann somit geprüft werden, ob sich an einer bestimmten Position tatsächlich die gewünschte Reihenklemme oder ein anderes elektrisches Bauteil befindet. Der Greifer kann dementsprechend auch so gesteuert werden, dass er nacheinander zu mehreren Kassetten oder Verpackungen bewegt wird und deren Inhalt mittels des RFID-Lesegeräts erfasst. Jede Kassette bzw. jede Verpackung enthält identische, gestapelte Bauteile. Die mittels des RFID-Lesegeräts erfassten Informationen, die den in den einzelnen Kassetten und Verpackungen enthaltenen Bauteilen wie Reihenklemmen zugeordnet sind, werden gespeichert, so dass der Greifer 19 anschließend gezielt zu dem jeweiligen Magazinturm, der jeweiligen Kassette oder Verpackung bewegt werden kann, um eine bestimmte Reihenklemme oder ein anderes Bauteil aufzunehmen.

## Patentansprüche

1. Greifer (1) für einen Roboter, der eine um eine Drehachse (3) schwenkbare Grundplatte (2) aufweist, von der sich mehrere in Umfangsrichtung verteilt angeordnete Greiferbacken (4, 5, 6) erstrecken, wobei eine Oberfläche (9) einer Greiferbacke (4, 5, 6) eine erste Ausnehmung (8) aufweist, die an die Außenkontur eines ersten zu greifenden Objekts angepasst ist, sowie wenigstens eine weitere Ausnehmung (10), die an die Außenkontur eines weiteren zu greifenden Objekts angepasst ist, wobei die beiden Ausnehmungen (8, 10) unterschiedlich geformt sind, sich wenigstens teilweise überdecken und in unterschiedlichen Ebenen angeordnet sind, **dadurch gekennzeichnet, dass** eine Greiferbacke (4, 5, 6, 21) eine Spanneinrichtung mit einem inneren Teil (13, 22) und einem äußeren Teil (12, 23), das gegenüber dem inneren Teil (13, 22) bewegbar ist, aufweist, wobei das äußere Teil (12, 23) zwischen einer äußeren Position, in der es von dem inneren Teil (13, 22) beabstandet ist, und einer inneren Position, in der ein Objekt gegriffen werden kann, verschiebbar ist.

2. Greifer nach Anspruch 1, **dadurch gekennzeichnet, dass** die Ausnehmungen (8, 10) parallel zur Oberfläche (9) der Greiferbacke (4, 5, 6) angeordnet sind.

3. Greifer nach Anspruch 1 oder 2, **dadurch gekennzeichnet, dass** sich wenigstens eine Ausnehmung (8, 10) bis zu einer Kante einer Greiferbacke (4, 5, 6) erstreckt.

4. Greifer nach einem der vorangehenden Ansprüche, **dadurch gekennzeichnet, dass** der innere Teil (13, 22) und der äußere Teil (12, 23) eine gemeinsame Kante (11) aufweisen.

5. Greifer nach einem der vorangehenden Ansprüche, **dadurch gekennzeichnet, dass** die Ausnehmungen (8, 10) bezüglich der Drehachse (3) außenseitig an der Greiferbacke (4, 5, 6, 21) angeordnet sind.

6. Greifer nach einem der vorangehenden Ansprüche, **dadurch gekennzeichnet, dass** eine Greiferbacke (4, 5, 6) im Bereich einer Anlagefläche für ein zu greifendes Objekt ein Unterdruckerzeugungsmittel oder einen Unterdruckanschluss aufweist.

7. Greifer nach einem der vorangehenden Ansprüche, **dadurch gekennzeichnet, dass** eine Greiferbacke einen Sensor zum Erfassen eines gegriffenen Objekts aufweist.

8. Greifer nach einem der vorangehenden Ansprüche, **dadurch gekennzeichnet, dass** eine Greiferbacke eine Überlastsicherung mit einer vorzugsweise einstellbaren Auslöseschwelle aufweist.

9. Greifer nach einem der vorangehenden Ansprüche, **dadurch gekennzeichnet, dass** die Greiferplatte (2) zwei, drei oder vier an der Grundplatte (2) in identischen Winkelabständen angebrachte Greiferbacken (4, 5, 6) aufweist.

10. Greifer nach einem der vorangehenden Ansprüche, **dadurch gekennzeichnet, dass** wenigstens eine Ausnehmung (8, 10) an die Kontur einer auf einer Hutschiene befestigbaren Klemme angepasst ist.

11. Roboter, mit einem Grundkörper, an dem ein um mehrere Achsen schwenkbarer Greifer (1) nach einem der Ansprüche 1 bis 10 angeordnet ist, der mittels einer Steuerungseinrichtung steuerbar ist.

12. Roboter nach Anspruch 11, **dadurch gekennzeichnet, dass** die Steuerungseinrichtung dazu ausgebildet ist, den Greifer (1) so zu steuern, dass die Objekte nebeneinander auf einer Profilschiene anordenbar sind.

13. Roboter nach Anspruch 11 oder 12, **dadurch gekennzeichnet, dass** er einen Linearantrieb aufweist und entlang einer Bewegungsrichtung verfahrbar ist.

14. Roboter nach Anspruch 13, **dadurch gekennzeichnet, dass** die Steuerungseinrichtung dazu ausgebildet ist, den Roboter mittels des Linearantriebs zwischen einer zu bestückenden Profilschiene und wenigstens einem einen Vorrat an Objekten aufweisenden Magazin zu verfahren, um die Greiferbacken (4, 5, 6) mit Objekten zu bestücken.

## Claims

1. A gripper (1) for a robot, which comprises a base plate (2) pivotable about an rotational axis (3) and from which a plurality of gripper jaws (4, 5, 6) distributed in the circumferential direction extend, a surface (9) of a gripper jaw (4, 5, 6) comprising a first recess (8) which is adapted to the outer contour of a first object to be gripped, and at least another recess (10) which is adapted to the outer contour of another object to be gripped, said two recesses (8, 10) being of different shapes and at least partially overlapping and arranged in different planes, **characterized in that** a gripper jaw (4, 5, 6, 21) comprises a clamping device having an inner part (13, 22) and an outer part (12, 23) movable relative to the inner part (13, 22), the outer part (12, 23) being displaceable between an outer position, where it is spaced from the inner part (13, 22), and an inner position, where an object can be gripped.

2. The gripper according to claim 1, **characterized in that** the recesses (8, 10) are arranged parallel to the surface (9) of the gripper jaw (4, 5, 6).

3. The gripper according to claim 1 or 2, **characterized in that** at least one recess (8, 10) extends to an edge of a gripper jaw (4, 5, 6).

4. The gripper according to one of the preceding claims, **characterized in that** the inner part (13, 22) and the outer part (12, 23) have a common edge (11).

5. The gripper according to one of the preceding claims, **characterized in that** the recesses (8, 10) are arranged on the outside of the gripper jaw (4, 5, 6, 21) with respect to the rotational axis (3).

6. The gripper according to one of the preceding claims, **characterized in that** a gripper jaw (4, 5, 6) has a vacuum generating means or a vacuum connection in the region of a contact surface for an object to be gripped.

7. The gripper according to one of the preceding claims, **characterized in that** a gripper jaw comprises a sensor for detecting a gripped object.

8. The gripper according to one of the preceding claims, **characterised in that** a gripper jaw comprises an overload protection with a preferably adjustable trigger barrier.

9. The gripper according to one of the preceding claims, **characterized in that** the gripper plate (2) has two, three or four gripper jaws (4, 5, 6) attached to the base plate (2) at identical angular spacings.

10. The gripper according to one of the preceding claims, **characterized in that** at least one recess (8, 10) is adapted to the contour of a clamp attachable to a tophat rail.

11. A robot, having a base body on which a gripper (1) in accordance with one of claims 1 to 10 is arranged which is pivotable about a plurality of axes and which is controllable by means of a control device.

12. The robot according to claim 11, **characterized in that** the control device is designed to control the gripper (1) such that the objects can be arranged next to one another on a profile rail.

13. The robot according to claim 11 or 12, **characterised in that** it has a linear drive and is movable along a direction of movement.

14. The robot according to claim 13, **characterized in that** the control device is designed to move the robot by means of the linear drive between a profile rail to be loaded and at least one magazine having a supply of objects to load the gripper jaws (4, 5, 6) with objects.

## Revendications

1. Dispositif de préhension (1) pour un robot qui comporte une plaque de base (2) pouvant pivoter autour d'un axe de rotation (3), à partir de laquelle plusieurs mors (4, 5, 6) répartis dans le sens périphérique s'étendent, en ce qu'une surface (9) d'un mors (4, 5, 6) comporte un premier évidement (8) qui est adapté au profil extérieur d'un premier objet à saisir, ainsi qu'au moins un autre évidement (10) qui est adapté au profil extérieur d'un autre objet à saisir, en ce que les deux évidements (8, 10) sont formés différemment, sont disposés au moins en partie de manière chevauchante ou à différents niveaux, **caractérisé en ce qu'**un mors (4, 5, 6, 21) comporte un dispositif de serrage avec une partie intérieure (13, 22) et une partie extérieure (12, 23) laquelle peut être déplacée par rapport à la partie intérieure (13, 22), **en ce que** la partie extérieure (12, 23) est déplaçable entre une position extérieure dans laquelle elle est espacée de la partie intérieure (13, 22), et une position intérieure dans laquelle un objet peut être saisi.

2. Dispositif de préhension selon la revendication 1, **caractérisé en ce que** les évidements (8, 10) sont disposés parallèlement par rapport à la surface (9) du mors (4, 5, 6).

3. Dispositif de préhension selon la revendication 1 ou 2, **caractérisé en ce qu'**au moins un évidement (8, 10) s'étend jusqu'à une arête d'un mors (4, 5, 6).

4. Dispositif de préhension selon l'une des revendications précédentes, **caractérisé en ce que** la partie intérieure (13, 22) et la partie extérieure (12, 23) présentent une arête commune (11).

5. Dispositif de préhension selon l'une des revendications précédentes, **caractérisé en ce que** les évidements (8, 10) par rapport à l'axe de rotation (3) sont disposés sur la face extérieure du mors (4, 5, 6, 21).

6. Dispositif de préhension selon l'une des revendications précédentes, **caractérisé en ce qu'**un mors (4, 5, 6) comporte dans la zone d'une surface d'appui un moyen de génération de dépression ou un raccord de dépression pour un objet à saisir.

7. Dispositif de préhension selon l'une des revendications précédentes, **caractérisé en ce qu'**un mors comporte un capteur pour la détection d'un objet saisi.

8. Dispositif de préhension selon l'une des revendications précédentes, **caractérisé en ce qu'**un mors comporte une protection contre les surcharges avec un seuil de déclenchement de préférence réglable.

9. Dispositif de préhension selon l'une des revendications précédentes, **caractérisé en ce que** la plaque (2) du dispositif de préhension comporte deux, trois ou quatre mors (4, 5, 6) montés sur la plaque de base (2) à des distances angulaires identiques.

10. Dispositif de préhension selon l'une des revendications précédentes, **caractérisé en ce qu'**au moins un évidement (8, 10) est adapté au profil d'une bride de serrage susceptible d'être fixée sur un rail DIN symétrique.

11. Robot comportant un corps de base sur lequel un dispositif de préhension (1) susceptible de pivoter autour de plusieurs axes est disposé selon l'une des revendications 1 à 10, ledit dispositif de préhension pouvant être commandé au moyen d'un dispositif de commande.

12. Robot selon la revendication 11, **caractérisé en ce que** le dispositif de commande est conçu de façon à commander le dispositif de préhension (1) pour que les objets puissent être disposés l'un à côté de l'autre sur un rail profilé.

13. Robot selon la revendication 11 ou 12, **caractérisé en ce qu'**il comporte un entraînement linéaire et est susceptible de se déplacer le long d'un sens de déplacement.

14. Robot selon la revendication 13, **caractérisé en ce que** le dispositif de commande est conçu pour déplacer le robot au moyen de l'entraînement linéaire entre un rail profilé à équiper et au moins un magasin comportant un stock d'objets pour équiper les mors (4, 5, 6) avec des objets.
